# EUROPEAN PATENT APPLICATION

(11) **EP 2 615 000 A1**
(43) Date of publication of application: **17.07.2013**
(21) Application number: 11797408.9
(22) Date of filing: 28.03.2011
(51) Int. Cl.: B60R 25/08

(54) **SEMI-TRAILER AND TRAILER VEHICLE BLOCKING-SYSTEM STRUCTURAL ARRANGEMENT BY MEANS OF ACTUATION ON THE BRAKE SYSTEM**

(30) Priority: 24.06.2010 BR MU9001100 U
(71) Applicant: Guerra, Marcos, CEP: 95020-471 Rio Grande do Sul (BR)
(72) Inventor: Guerra, Marcos, CEP: 95020-471 Rio Grande do Sul (BR)
(74) Representative: Robba, Pierpaolo
(86) International application number: PCT/BR2011/000088
(87) International publication number: WO 2011/160195

(57) **Abstract**

**"CONSTRUCTIVE DISPOSITION OF LOCKING SYSTEM IN TRAILER AND SEMI-TRAILER VEHICLES BY ACTUATION IN THE BRAKE SYSTEM",** as described in the report and as per illustrations attached, is characterized by a new constructive disposition introduced in the semi-trailer locker by cutting the air supply of the brake system in order to stop the trailer or semi-trailer vehicle in situations such as theft or similar, with remote and progressive actuation.

## Description

### Subject:

This Utility Model patent refers to a new constructive disposition introduced in a semi-trailer locker and actuated in the brake system air supply, which used to stop semi-trailer and trailer vehicles in situations such as larceny or similar with remote and progressive actuation.

### Technical Status:

The technical status of the object concerned is known by several brake locking mechanisms of vehicles with remote or manual actuation, but they have a constructive disposition and operation that is different from the object of this patent.

We can mention the previous existence of PI 0206173-2 - Vehicle Locker through Braking, in which the system locks the wheels with the vehicle stationary by manual actuation or via Satellite, GPS signal or similar.

To complement, we may also mention Addition C1 0206173-2, which was added to the tracking and control system and wheel lock system operated via satellite (4) with GPS technology or similar, however, maintaining the same operation principle and purpose.

We may also analyze the existence of MU8403242-1 - Electronic-Pneumatic Locker System, which basically consists of a remote checking system (via satellite, GPRS or similar), of the violation or not of the connection between electronic circuit boards in the tractor and in the trailer or semi-trailer, which indicates the non-authorized separation of the tractor from the trailer, causing the brake to immediately lock because the electro-valve solenoid breaks down 1 D. Every locking and unlocking process in the system takes place with the use of a password that can be entered in loco.

The system above controls the assembly using electric signals that are sent by electronic boards. It sends a signal if the trailers gets separated from the tractor and immediately locks the brake system and sets off a buzzer, therefore the operator has too little time to stop safely.

However, in these previous documents found, we can see that the first one is about a wheel lock system that locks the wheels with the vehicle stationary, and the second one locks the brakes immediately by sending a signal that the trailer got inadvertently separated from the tractor.

We can also add Invention **PI0703612-4 - SEMOI-TRAILER TRACKER AND LOCATOR,** from the same applicant, as described in his descriptive report. It is basically a tracker and locator for semitrailers and it has a central data processing unit 1 installed inside the semi-trailer, which is responsible for managing data collected by the sensor conditioner 2, which monitors the tire pressure sensors 3, the door sensors 4, the semi-trailer occupation sensors 5, battery level sensor 6, and temperature sensor 7; the central data processing unit 1 is also responsible for managing data by the actuator amplifiers 8, which actuate the electric locks in the doors 10, and the brake lock 9; the electric lock in the doors 10 prevent the doors from opening inadvertently and the brake lock 9 prevents the semi-trailer from moving; the power manager 12 reads the information of the battery level sensor information 6 about the charge present in the electric battery 11, and communicates this information to the central data processing unit 1, signaling the need for recharging the electric battery 11; the GPS unit 16 captures via satellite information about the geographic position, time and speed of the semi-trailer and sends this data for the central data processing unit 1; the central processing unit 1 sends all the data stored periodically to the control remote station 19.

It also worth mentioning the **MU8802215-3 - Constructive Disposition in Locking System in Semi-Trailer and Trailer Vehicles by Brake Failure Simulation,** of this same applicant, which has a similar system as the one claimed:
Construction disposition in locking system in semi-trailer and trailer vehicles by brake failure simulation, as described in the report and as per illustrations attached, consists of a central data processing unit 1 installed in the trailer or semi-trailer, whose data is transmitted to a remote control station 9 via satellite modem 10 or GPRS modem 12, where the geographic position is registered by the GPS unit 11, **characterized by** actuator 2, when actuated, piloting valve 5, which cuts the air supply from the tractor Y and directs the air coming from the independent auxiliary reservoir 3 to the one-way valve, which in turn directs the air to the exhaust valve 6 responsible for reducing the air pressure that runs through the circuit, engaging the emergency valve 8, which causes the trailer or semi-trailer to brake gradually, simulating brake failure; this dual-retaining valve 7 prevents the air from returning and directs it to the emergency valve 8."

In this case, the brake is locked by decreasing the brake service air pressure through the exhaust valve 6, until the emergency valve 8 is actuated, causing the vehicle to come to a stop.

It is also worth mentioning application **MU8902411-7 - Constructive Disposition in Locking System for Trailer and Semi-Trailer Vehicles by Brake Failure Simulation,** of the same applicant, which presents an upgrade to the previous system, where he claims:
Constructive disposition in locking system for trailer and semi-trailer vehicles by brake failure simulation, as described in the report and as per illustrations attached, consists of a central data processing unit 1 , which is installed in the trailer or semi-trailer, and whose data is transmitted to a remote control station 8 through a satellite modem or GRPS 9, where the geographic position is registered by the GPS unit 10. It is **characterized by** the brake locking system being remotely actuated via central data processing unit 1 and the alert signals come out through LEDs 3 and a buzzer 4 to warn the driver and perimeter, followed by the actuation of actuator 2, which pilots the first-stage valves 5 that work in the service line A of the semi-trailer brake to follow the opening and closing sequence of the first-stage valves 5: repetition of three times after the first-stage valves 5 open for one second then close within an interval of four seconds, followed by a _repetition of five times after the first-stage valves 5 open for one second then close within an interval of two seconds, followed by a repetition of ten times after the first-stage valves 5 open for one second then close within an interval of one second; after this sequence, the first-stage valves 5 are opened and stay open; after 20 seconds of the definite opening of the first-stage valve 5 the actuator 2 sends and electric signal to the second-stage valve 6, which works directly in the emergency line B of the semi-trailer brake, cutting the air supply coming from the reservoir 7 to the brake system; this signal closes the second-stage valve 6 and keeps it closed, making the vehicle to come to a stop, and the service line A in the semi-trailer brake resumes working through the central data processing unit 1 or by being manually unlocked through the button 11, which restates the locking system when pushed, and only the user will be able to enter the proper password and deactivate the locking mechanism of the vehicle brake.

These constructive and operation methods differ from the mechanism presented in this patent in terms of brake system locking method.

### Inventive Concept:

This Constructive Disposition of a Locking System in Trailer and Semi-trailer Vehicles by Actuation in the Brake System intends to provide practical improvements, as it is based on the inventive concept of functional and manufacturing improvement concerning the object technical status.

For that, the present object was developed based on the difficulties found in the previous systems, especially in the ones described in the MU8802215-3 and MU 8902411-7

In the system specified in MU8802215-2 the locking action takes place via emergency line actuation, where it is not possible to control the pressure in the chambers; therefore, the wheels are locked and the vehicle loses drivability, and it is not possible to point the moment it happens exactly, because it depends on the time the air takes to be exhausted from the reservoir.

In the mechanism detailed in MU8902411-7 the locking process takes place directly in the brake service line, where the pressure in the brake chambers is controlled for it to be locked safely, gaining control over the wheel locking and vehicle stop process. This system uses first-stage and second-stage valves to simulate a failure in the brake service line A and to cause the vehicle to stop by actuating the emergency line B in the trailer and semi-trailer brake.

In the system presented in the patent application for the object concerned, the operation in the brake system with the intent of stopping the vehicle gradually is made by the tracking center, which directly controls the first-stage and second-stage valves in the brake service line A and emergency line B.

As a result, the device construction is improved, as well as the internal layout of its components, allowing a complete and safe system for its intended purpose.

### Advantages:

This proposal of a new Constructive Disposition in a Locking System in Trailer and Semi-trailer Vehicles by Actuation in the Brake System has advantages, such as the technical status of the object concerned:
● It allows stopping the trailer or semi-trailer by simulating a failure in their brake system, independently from the tractor brake system, which makes the process safer and also reduces the chance of trailer or semi-trailer and cargo theft with the engagement to another tractor.
● It provides increased safety to the semi-trailer locking process by simulating a failure in the brakes, since the actuation of the system in the brake service line allows controlling the pressure in the air chambers, and therefore it is possible to determine the time the wheels are locked without losing vehicle drivability, thus mitigating the risk of accidents.
● The failure simulated in the trailer or semi-trailer brake system is signaled to the driver and perimeter, thus warning the driver about the problem so he or she can slow down the vehicle, also gradually, until it comes to a complete stop, that is, with more safety to the vehicle and to anyone close to it.
● The failure simulation is actuated via satellite or GPRS through the tracking system installed in the trailer or semi-trailer, and it does not require any human local interference to actuate it.
● The method of system construction and installation allows continued operation even when the tractor is replaced, and it does not allow any local human intervention to stop the process, such as cutting cables or wires, since it is installed inside a special box that is hard to access.
● The control for the brake system to resume working effectively is made via satellite/GPRS or manually by entering a password, which allows the removal of the trailer or semi-trailer by authorized people only.

### Illustrations:

Aiming to make research easier and provide a better understanding of the present patent, as said in the report, according to a basic and preferential way of implementation created by the applicant, references are made to the illustrations attached, which are an integral part of this document and support the present descriptive report, where:

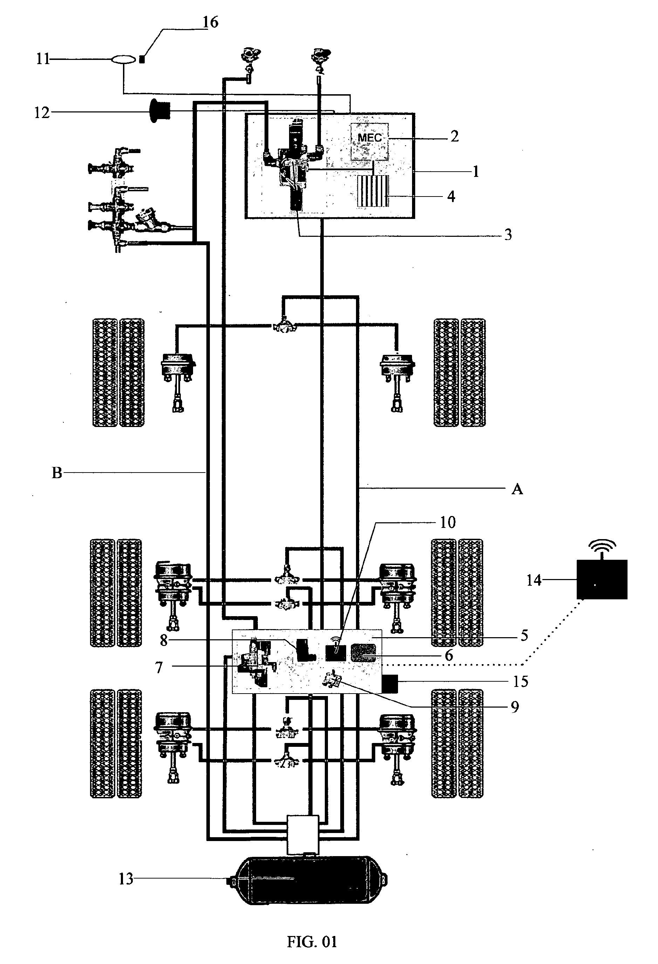

Figure 01 - shows the interconnection between the brake service system in the trailer or semi-trailer and the emergency system.

### Description:

As you can see in the figures shown, the object of the present patent consists of a central data processing unit 1, which is installed either in the trailer or semi-trailer close to the engagement mechanism with the tractor, inside a special box in a location that is not easy to access in order to make it hard to stop the system operation, and it consists of an ECM - Electronic Control Module 2, a second-stage valve 3 and a set of batteries 4 that store electric power.

The central data processing unit 1 is also responsible for maintaining the battery set charge, as well as checking other items, such as sensors and other actuators.

The tracking center 5 which is also installed in the trailer or semi-trailer, more specifically close to the rear axle assembly, inside a special box, contains an electronic tracking module 6, a first-stage valve 7, a pressure reducing valve 8, and an alternator valve 9, where the tracking center 5 checks the control data on a regular basis by emitting and sending an intermittent signal with the central data processing unit 1.

In the tracking center 5 is where it is also made the geographic tracking of the trailer and semi-trailer by the GPS unit 10, apart from checking other items, such as sensors and actuators.

The locking procedure is controlled by the tracking center 5 by making an intervention on the electro-valves connected to the brake system in the service system **A** or through the central data processing unit 1 acting on the emergency system **B.**

When you request for the trailer or semi-trailer to be locked, either remotely or locally, the tracking center 5, through the central data processing unit 1, turns on the alert system (hazard light) of the trailer or semi-trailer through LED(s) 11, which remain on throughout the whole locking procedure, and aim at warning the perimeter and driver.

Then, right after the tracking center 5, through the central data processing unit 1, turns on the buzzer 12 installed in the semi-trailer, which remains in action for 3 minutes, aiming at reinforcing the warn to the perimeter and also communicating the driver that the trailer or semi-trailer is being locked.

Thirty (30) seconds after the LEDs 11 and the buzzer 12 issue an alert, the tracking center 5 sends an electric signal to the first-stage valve 7, which acts directly from the semi-trailer brake **A** service line, keeping the pressure in 1.5 BAR.

The control of the first-stage valves 7 controls their opening and closing in a preset sequence, in the following order:
**I** the first-stage valves 7 open for one second then close within an interval of four seconds, and this sequence is repeated three times.
**II** the first-stage valves 7 open for one second then close within an interval of two seconds, and this sequence is repeated five times.
**III**the first-stage valves 7 open for one second then close within an interval of two seconds, and this sequence is repeated ten times..

After the procedure is complete, the first-stage valve 7 opens and stays open.

After 20 seconds of the last phase is completed by the first-stage valve 7 the tracking center 5, through the central data processing unit 1, sends an electric signal to the second-stage valve 3 that acts directly in the emergency line **B** of the trailer or semi-trailer brake, permanently cutting the air supply coming from the reservoir 13. This signal simulates the manual engagement of the parking brake system.

All the information regarding the sensors and actuators is processed in the tracking center 5 and transmitted to a remote control station 14 through a satellite modem of GPRS 15.

The GPS unit allows synchronizing with the GPS (Global Positioning System) satellite signals to register the geographic location of the semi-trailer, date, time, and speed.

The system is activated remotely, and it may be motivated by a problem in any of the other checking items, such as failure in the semi-trailer suspension system, or due to detouring, bad use of the equipment or theft.

The semi-trailer brake service line A will only resume working when a new command is sent to the central data processing unit 5 or yet by being manually unlocked with button 16 installed in the trailer or semi-trailer. By pushing button 16, within three minutes from the time the locking process began, the semi-trailer will be completely unlocked for three minutes where, after this period ends, the tracker locks the semi-trailer again.

When locking the semi-trailer or trailer the user/driver is enabled to unlock it by entering a password given by the operations center in charge.

### Conclusion:

This way, the Constructive Disposition in the Locking System in Semi-trailer of Trailer Vehicles by Actuation in the Brake System is supported by new technical and functional features, which are different from the Utility Model patent from the same applicant, as we can see in the figures attached and understand in the descriptive report, therefore, deserving the legal protection requested.

## Claims

1. **The "CONTRUCTION DISPOSITION INTRODUCED IN THE LOCK SYSTEM OF SEMI-TRAILER AND TRAILER VEHICLES AND ACTUATED IN THE BRAKE SYSTEM",** as described in the report, and as per illustrations attached, is comprised of a central data processing unit 1 which is installed in the trailer or semi-trailer and whose data is transmitted to a remote control station 14 through a satellite modem GPRS 15, **which is characterized by** the brake locking system being actuated remotely through the central data processing unit 1, that consists of an ECM - Electronic Control Module 2, a second-stage valve 3, and a set of batteries 4 for power storage, using the tracking center 5 that contains an electronic tracking module 6, a first-stage valve 7, a pressure reducing valve, and a shuttle valve 9, where, the tracking center 5 by emitting and receiving intermittent signals with the central data processing unit 1, checks the control data on a regular basis, including geographic tracking by the GPS unit 10. The locking procedure is controlled by the tracking center 5 through an intervention on the electro-valves connected to the brake system in the service system **A** and the central data processing unit 1 operating in the emergency system **B,** and the tracking center 5 through the central data processing unit 1 determines whether the LED 11 and buzzer 12 will turn on, and whether the first-stage valve 7 that works directly in the brake service line **A** will open or close according to a preset sequence, keeping the pressure at 1.5 BAR, and the sequence is as follows: first-stage valves open 7 for one second and then close within an interval of four seconds, and this sequence is repeated three times, first-stage valves 7 open for one second and then close within an interval of two seconds, and this sequence is repeated five times, first-stage valves 7 open for one second and then close within an interval of one second, and this sequence is repeated ten times; when this sequence ends the first-stage valve 7 opens permanently and stays open; after 20 seconds from the last phase performed by the first-stage valve 7 the tracking center 5, through the central data processing unit 1, sends an electrical signal to the second-stage valve 3 that operates in the brake emergency line **B** cutting the air supply from the reservoir 13, where this signal simulates the manual actuation of the parking brake system; the brake service line **A** resumes working with a new signal from the tracking center 5 or by being manually unlocked by pushing the button 16 within three minutes from the time the locking process begins. The semi-trailer is then completely unlocked for three minutes, and then when this period ends, the tracker performs the locking procedure again but this time permanently.
